# EUROPEAN PATENT SPECIFICATION

(11) **EP 2 445 115 B1**
(45) Date of publication and mention of the grant of the patent: **20.04.2016**
(21) Application number: 09852755.9
(22) Date of filing: 31.12.2009
(51) Int. Cl.: H04B 1/707, H04L 25/03, H04B 1/711

(54) **METHOD AND APPARATUS FOR CANCELLING INTERFERENCE**
VERFAHREN UND VORRICHTUNG ZUR INTERFERENZUNTERDRÜCKUNG
PROCÉDÉ ET APPAREIL DESTINÉS À ANNULER LE BROUILLAGE

(43) Date of publication of application: 25.04.2012
(73) Proprietor: ZTE Corporation, Shenzhen, Guangdong 518057 (CN)
(72) Inventor: LIANG, Yan, Guangdong 518057 (CN); LIAO, Qun, Guangdong 518057 (CN)
(74) Representative: Manitz, Finsterwald & Partner GbR
(86) International application number: PCT/CN2009/076366
(87) International publication number: WO 2011/079470

(56) References cited:
- WO-A1-2007/016553
- CN-A- 1 453 946
- CN-A- 1 471 252
- CN-A- 1 866 762
- CN-A- 101 179 293
- US-A1- 2006 142 041
- US-A1- 2008 205 329

## Description

### Technical Field

The present invention relates to the field of communication, and more especially, to a method and an apparatus for cancelling interference in a wireless communication system using an equalizer.

### Background of the Related Art

In CDMA systems, Inter-Symbol Interference (ISI) due to multipath and wireless channel distortion leads to inter-symbol nonorthogonality, so that the interference of multi-path, multi-channel and multi-user is a common problem in a wireless communication system which limits the system capacity. At the same time, as the data rate further increased, the problem is further exacerbated. Although the existing Rake receiver and the equalization receiver, to a certain extent, can solve the multipath interference and other issues, they cannot cancel the multiple access interference. In order to cancel the multiple access interference, the method for cancelling interference in the prior art is to use the known channel information to reconstruct the channel, and then remove the reconstructed signal from the received signal, so as to achieve the purposes that the interference is reduced and signal to interference ratio is improved from other users' or channels' point of view.

The channel reconstruction and interference cancellation need to use channel estimation information. For the systems using the Rake receiver, the channel estimation value acquired by the control channel can be directly used for the reconstruction; but for the equalization receiver users, since the equalizer corrects and compensates the system performance to some extent and reduces the inter-symbol interference, the channel estimation value at this time is no longer able to truly reflect the channel characteristics, thus the method for cancelling interference in the prior art cannot be applied in a scene using the equalizer.

The features of the preamble of the independent claims are known from WO 2007/016553 A1. Related technologies are also known from US 2008/205329 A1 and US 2006/142041 A1.

### Summary of the Invention

The present invention is to provide a method and an apparatus for cancelling interference as defined in the independent claims, to overcome the problem that the method for cancelling interference in the prior art cannot be applied in a scene using the equalizer.

In order to solve the aforementioned technical problem, a method for cancelling interference is provided, to be used in a wireless communication system using the equalizer, comprising:
executing data channel descrambling and despreading processing on baseband data to acquire unequalized multipath data, estimating the amplitude offset of the data channel relative to the control channel according to the multipath data and the control channel based channel estimation value, and further reconstructing the data channel, executing interference cancelling on the original baseband data and the data acquired after the data channel reconstruction.

Furthermore, the aforementioned method further comprises:
executing enhanced dedicated physical data channel (E-DPDCH) descrambling and despreading on the baseband data to acquire the unequalized E-DPDCH multipath data;
executing the multipath combination according to the acquired E-DPDCH multipath data and the dedicated physical control channel (DPCCH) based channel estimation value;
estimating the amplitude offset of the E-DPDCH relative to the DPCCH according to the data acquired after E-DPDCH multipath combination;
reconstructing the E-DPDCH according to the estimation value of the amplitude offset;
executing the interference cancelling on the original baseband data and the data acquired after E-DPDCH reconstruction.

Furthermore, the aforementioned method might also have the following feature:
For a wireless communication system using the chip-level equalizer, if the cyclic redundancy check (CRC) of E-DPDCH data acquired after the transmission channel demultiplexing is correct, executing E-DPDCH descrambling and despreading processing on the baseband data to acquire the unequalized E-DPDCH multipath data; and, re-encode the E-DPDCH data acquired after the transmission channel demultiplexing.

Furthermore, the aforementioned method might also have the following feature:
For a wireless communication system using the symbol-level equalizer, if the cyclic redundancy check(CRC) of the E-DPDCH data acquired after transmission channel demultiplexing is correct, use the unequalized E-DPDCH multipath data to execute the multipath combination; and, re-encode the E-DPDCH data acquired after the transmission channel demultiplexing.

Furthermore, the aforementioned method might also have the following feature:
the step of estimating the amplitude offset of the E-DPDCH relative to the DPCCH according to the data acquired after E-DPDCH multipath combination specifically comprises:
   using the DPCCH pilot information and/or non-pilot hard decision result to execute depolarization accumulation on the data acquired after DPCCH multipath combination to acquire the DPCCH amplitude information;
   using the re-encoded E-DPDCH data to execute the depolarization accumulation on the data acquired after E-DPDCH multipath combination to acquire the E-DPDCH amplitude information;
   dividing the acquired E-DPDCH amplitude information by the DPCCH amplitude information to acquire the estimation value of the amplitude offset of the E-DPDCH relative to the DPCCH.

Furthermore, the aforementioned method might also have the following feature:
the step of reconstructing the E-DPDCH according to the estimation value of the amplitude offset specifically comprises:
   spreading and scrambling, and then fading and filtering the E-DPDCH according to the amplitude offset estimation value, the DPCCH based channel estimation value, the re-encoded E-DPDCH data, the frequency offset estimation value and the multipath phase information.

In order to solve the aforementioned technical problem, a method for cancelling interference is further provided, to be used in a wireless communication system using the equalizer, comprising:
executing data channel descrambling and despreading on the baseband data to acquire the unequalized multipath data, executing the data channel based channel estimation according to the multipath data, reconstructing the data channel, and executing the interference cancelling on the original baseband data and the data acquired after channel reconstruction.

Furthermore, the aforementioned method specifically comprises:
executing E-DPDCH descrambling and despreading on the baseband data to acquire the unequalized E-DPDCH multipath data;
executing the E-DPDCH based channel estimation according to the acquired E-DPDCH multipath data;
reconstructing the E-DPDCH according to the channel estimation value acquired from the E-DPDCH based channel estimation;
executing the interference cancelling on the original baseband data and the data acquired after E-DPDCH reconstruction.

Furthermore, the aforementioned method might also have the following feature:
for a wireless communication system using the chip-level equalizer, if the cyclic redundancy check(CRC) of the E-DPDCH data acquired after transmission channel demultiplexing is correct, executing the E-DPDCH descrambling and despreading on the baseband data to acquire the unequalized E-DPDCH multipath data; and, re-encoding the E-DPDCH data acquired after transmission channel demultiplexing; execute the E-DPDCH based channel estimation according to the acquired E-DPDCH multipath data and the re-encoded E-DPDCH data.

Furthermore, the aforementioned method might also have the following feature:
For a wireless communication system using the symbol-level equalizer, if the cyclic redundancy check(CRC) of the E-DPDCH data acquired after transmission channel demultiplexing is correct, re-encoding the E-DPDCH data acquired after transmission channel demultiplexing, and using the existing unequalized E-DPDCH multipath data and the re-encoded E-DPDCH data to execute the E-DPDCH based channel estimation.

Furthermore, the aforementioned method might also have the following feature:
the step of reconstructing the E-DPDCH according to the channel estimation value acquired from the E-DPDCH based channel estimation specifically comprises:
   spreading and scrambling, and then fading and filtering the E-DPDCH according to the channel estimation value acquired from the E-DPDCH based channel estimation, the re-encoded E-DPDCH data and the multipath phase information.

In order to solve the aforementioned technical problem, an apparatus for cancelling interference is further provided, to be used in a wireless communication system using the equalizer, comprising: a baseband data storage unit, an E-DPDCH descrambling and despreading module, an MRC module, a re-encoding module, an E-DPDCH amplitude offset estimation module, an E-DPDCH channel reconstruction module and an interference cancellation module;
the baseband data storage unit is used to store the baseband data and the data acquired after interference cancellation;
the E-DPDCH descrambling and despreading module is used to acquire the data stored in the baseband data storage unit to execute E-DPDCH descrambling and despreading so as to acquire the unequalized E-DPDCH multipath data;
the MRC module is used to execute multipath combination according to the DPCCH based channel estimation value and the E-DPDCH multipath data acquired by the E-DPDCH descrambling and despreading module;
the re-encoding module is used to re-encode the E-DPDCH data acquired after transmission channel demultiplexing;
the E-DPDCH amplitude offset estimation module is used to use the DPCCH pilot information and/or non-pilot hard decision result, the data acquired after DPCCH multipath combination, the E-DPDCH data acquired after re-encoded by the re-encoding module, and the data acquired by the MRC module after E-DPDCH multipath combination, to estimate the amplitude offset of the E-DPDCH relative to the DPCCH;
the E-DPDCH channel reconstruction module is used to reconstruct the E-DPDCH according to the amplitude offset estimation value acquired by the E-DPDCH amplitude offset estimation module, the DPCCH based channel estimation value, the E-DPDCH data acquired after re-encoded by the re-encoding module, the frequency offset estimation value and the multipath phase information;
the interference cancellation module is used to execute the interference cancellation on the original baseband data stored in the baseband storage unit and the data acquired by the E-DPDCH channel reconstruction module, and store the data acquired after interference cancellation into the baseband data storage unit.

Furthermore, the aforementioned apparatus might also have the following feature:
the E-DPDCH amplitude offset estimation module is further used to use the DPCCH pilot information and/or non-pilot hard decision result to execute depolarization accumulation on the data acquired after the DPCCH multipath combination so as to acquire the DPCCH amplitude information, use the E-DPDCH data acquired after re-encoded by the re-coding module to execute depolarization accumulation on the data after E-DPDCH multipath combination acquired by the MRC module so as to acquire the E-DPDCH amplitude information; divide the acquired E-DPDCH amplitude information by the DPCCH amplitude information to acquire the estimation value of the amplitude offset of the E-DPDCH relative to the DPCCH.

In order to solve the aforementioned technical problem, an apparatus for cancelling interference is further provided, to be used in a wireless communication system using the equalizer, comprising: a baseband data storage unit, an E-DPDCH descrambling and despreading module, a re-encoding module, an E-DPDCH channel estimation module, an E-DPDCH channel reconstruction module and an interference cancellation module;
the baseband data storage unit is used to store the baseband data and the data acquired after interference cancellation;
the E-DPDCH descrambling and despreading module is used to acquire the data stored in the baseband data storage unit to execute E-DPDCH descrambling and despreading so as to acquire the unequalized E-DPDCH multipath data;
the re-encoding module is used to re-encode the E-DPDCH data acquired after transmission channel demultiplexing;
the E-DPDCH channel estimation module is used to execute the E-DPDCH based channel estimation according to the E-DPDCH multipath data acquired by the E-DPDCH descrambling and despreading module and the E-DPDCH data acquired after re-encoded by the re-encoding module;
the E-DPDCH channel reconstruction module is used to reconstruct the E-DPDCH according to the channel estimation value acquired by the E-DPDCH channel estimation module, the E-DPDCH data acquired after re-encoded by the re-encoding module and the multipath phase information;
the interference cancellation module is used to execute the interference cancellation on the original baseband data stored in the baseband storage unit and the data acquired by the E-DPDCH channel reconstruction module, and to store the data acquired after interference cancellation into the baseband data storage unit.

With the unequalized multipath data, the present invention addresses the problem that the method for cancelling interference in the prior art cannot be applied in a scene using the equalizer. The implementation is relatively simple and easy to be used in practical applications.

### Brief Description of Drawings

FIG. 1 is a flow chart of a method for cancelling interference in accordance with the first embodiment of the present invention;
FIG. 2 is a schematic diagram of an apparatus for cancelling interference in accordance with the first embodiment of the present invention;
FIG. 3 is a flow chart of a method for cancelling interference in accordance with the second embodiment of the present invention;
FIG. 4 is a schematic diagram of an apparatus for cancelling interference in accordance with the second embodiment of the present invention;
FIG. 5 is a flow chart of a method for cancelling interference in accordance with the third embodiment of the present invention;
FIG. 6 is a schematic diagram of a method for cancelling interference based on the chip-level equalizer and the DPCCH (Dedicated Physical Control Channel) channel estimation value in accordance with the first application example of the present invention;
FIG. 7 is a schematic diagram of a method for cancelling interference based on the chip-level equalizer and the E-DPDCH (E-DCH Dedicated Physical Data Channel) channel estimation value in accordance with the second application example of the present invention;
FIG. 8 is a schematic diagram of a method for cancelling interference based on the symbol-level equalizer and the DPCCH channel estimation value in accordance with the third application example of the present invention;
FIG. 9 is a schematic diagram of a method for cancelling interference based on the symbol-level equalizer and the E-DPDCH channel estimation value in accordance with the fourth application example of the present invention.

### Preferred Embodiments of the Present Invention

In a system which uses the Rake receiver to cancel interference, the data channel demodulation and reconstruction usually use the channel estimation value acquired by the control channel. Due to the delay requirements of the power control, it is to make the control channel only be demodulated in the real time data stream. Therefore, the channel estimation value acquired by the control channel is able to truly reflect the channel quality of the user antenna port. Therefore, in a system using the Rake receiver, the interference cancellation is not a problem.

With the increase of the user data transmission rate, the inter-path and inter-symbol interference gradually increases, and to improve the data channel decoding accuracy rate, equalization technique could be used. No matter using the chip-level equalization or the symbol-level equalization, the channel estimation value used for data channel demodulation is the corrected and compensated channel estimation value, therefore, the inter-symbol interference is reduced to some extent. This channel estimation value is no longer able to truly reflect the channel characteristics. If this channel estimation value is still used to reconstruct the data channel, the interference might not be able to be cancelled; moreover, unexpected interference might be introduced.

In this case, if the control channel based channel estimation value is used to reconstruct the data channel, re-demodulate the data channel is needed to acquire the amplitude offset of the data channel relative to the control channel to correctly reconstruct the data channel; if the data channel based channel estimation value is used to reconstruct the data channel, it also needs to re-demodulate the data to acquire the needed channel estimation value. Therefore, in a wireless communication system using the equalizer, no matter what kind of channel estimation value is used to reconstruct the data channel, it needs to descramble and despread the data channel one more time, which is the key point of the present invention.

In the following, the present invention will be described in detail with combination of the accompanying drawings and specific embodiments.

### The first embodiment

The first embodiment uses the control channel based channel estimation value to reconstruct the data channel, the method for cancelling interference in this embodiment comprises:
executing data channel descrambling and despreading on the baseband data to acquire the unequalized multipath data, estimating the amplitude offset of the data channel relative to the control channel according to the multipath data and the control channel based channel estimation value, and then reconstructing the data channel, and executing the interference cancellation on the original baseband data and the data acquired after channel reconstruction.

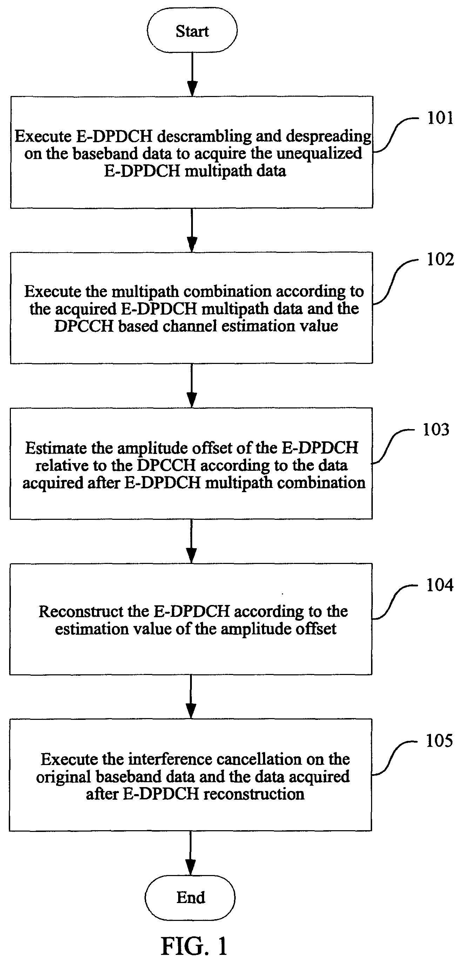

Specifically, as shown in FIG. 1, the following steps are comprised:
step 101, executing E-DPDCH descrambling and despreading on the baseband data to acquire the unequalized E-DPDCH multipath data;
wherein, for a wireless communication system using the chip-level equalizer, if the cyclic redundancy check(CRC) of the E-DPDCH data acquired after transmission channel demultiplexing is correct, this step is executed, that is, executing E-DPDCH re-descrambling and re-despreading on the baseband data;
for a wireless communication system using the symbol-level equalizer, since the E-DPDCH descrambling and despreading is executed on the baseband data before the symbol-level equalization in the prior art, the unequalized E-DPDCH multipath data acquired with the prior art can be directly used;
in addition, if the CRC of the E-DPDCH data acquired after transmission channel demultiplexing is correct, the E-DPDCH data acquired after transmission channel demultiplexing is re-encoded; wherein, the method for re-encoding the E-DPDCH data is an existing technique which specifically can be found in 3GPP (Third Generation Partnership Projects) TS25.212, and is not described in detail here;
step 102, execute the multipath combination according to the acquired E-DPDCH multipath data and the DPCCH based channel estimation value;
wherein, as mentioned above, for a wireless communication system using the symbol-level equalizer, the available unequalized E-DPDCH multipath data can be used for the multipath combination;
step 103, estimate the amplitude offset of the E-DPDCH relative to the DPCCH according to the data acquired after E-DPDCH multipath combination;
when using the DPCCH based channel estimation value to reconstruct the E-DPDCH, the channel estimation value contains the transmit power information of the DPCCH itself, however, compared with the transmit power of the DPCCH, the transmit power of the E-DPDCH usually has a certain offset. Therefore, in order to reconstruct the E-DPDCH signal correctly, it needs to adjust the DPCCH channel estimation value, which is the role of this step.

This step specifically comprises the following sub-steps:
(a) using the DPCCH pilot information and/or non-pilot hard decision result to execute depolarization accumulation on the data acquired after DPCCH multipath combination to acquire the DPCCH amplitude information;
(b) using the E-DPDCH data acquired after re-encoding to execute depolarization accumulation on the data acquired after E-DPDCH multipath combination to acquire the E-DPDCH amplitude information;
(c) dividing the acquired E-DPDCH amplitude information by the DPCCH amplitude information to acquire the estimation value of the amplitude offset of the E-DPDCH relative to the DPCCH;
   step 104, reconstruct the E-DPDCH according to the estimation value of the amplitude offset;
   specifically, this step comprises: spreading and scrambling the E-DPDCH according to the estimation value of the amplitude offset, the DPCCH based channel estimation value, the re-encoded E-DPDCH data, the frequency offset estimation value and the multipath phase information, and then fading (using the channel estimation value as the abstract of the experienced fading) and filtering (the two RRC filtering processes when the analog signal is through the transmitter and the receiver) the E-DPDCH;
   step 105, execute the interference cancellation on the original baseband data and the data acquired after E-DPDCH reconstruction.

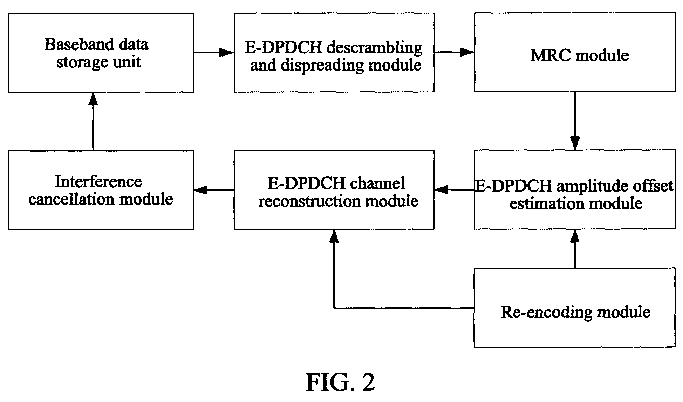

As shown in FIG. 2, the apparatus for cancelling interference in accordance with the first embodiment of the present invention comprises: a baseband data storage unit, an E-DPDCH descrambling and despreading module, a maximum ratio combining (MRC) module, a re-encoding module, an E-DPDCH amplitude offset estimation module, an E-DPDCH channel reconstruction module and an interference cancellation module;
wherein the baseband data storage unit is used to store the baseband data and the data acquired after interference cancellation;
the E-DPDCH descrambling and despreading module is used to extract the data stored in the baseband data storage unit to execute E-DPDCH descrambling and despreading so as to acquire the unequalized E-DPDCH multipath data;
the MRC module is used to execute the multipath combination according to the DPCCH based channel estimation value and the E-DPDCH multipath data acquired by the E-DPDCH descrambling and despreading module;
the re-encoding module is used to re-encode the E-DPDCH data acquired after transmission channel demultiplexing;
the E-DPDCH amplitude offset estimation module is used to estimate the amplitude offset of the E-DPDCH relative to the DPCCH by using the DPCCH pilot information and/or non-pilot hard decision result, the data acquired after DPCCH multipath combination, the E-DPDCH data acquired after re-encoded by the re-encoding module, and the data acquired by the MRC module after E-DPDCH multipath combination;
the E-DPDCH channel reconstruction module is used to reconstruct the E-DPDCH according to the amplitude offset estimation value acquired by the E-DPDCH amplitude offset estimation channel, the DPCCH based channel estimation value, the E-DPDCH data acquired after re-encoded by the re-encoding module, the frequency offset estimation value and the multipath phase information;
the interference cancellation module is used to execute the interference cancellation on the original baseband data stored in the baseband data storage unit and the data acquired by the E-DPDCH channel reconstruction module, and to store the data acquire after interference cancellation into the baseband data storage unit.

Preferably, the E-DPDCH amplitude offset estimation module is further used to use the DPCCH pilot information and/or non-pilot hard decision result to execute the depolarization accumulation on the data acquired after DPCCH multipath combination to acquire the DPCCH amplitude information, use the E-DPDCH data acquired after re-coded by the re-encoding module to execute depolarization accumulation on the data acquired by the MRC module after E-DPDCH multipath combination to acquire the E-DPDCH amplitude information; divide the E-DPDCH amplitude information by the DPCCH amplitude information to acquire the estimation value of the amplitude offset of the E-DPDCH relative to the DPCCH.

Preferably, the E-DPDCH channel reconstruction module is further used to spread and scramble, and then fade and filter the E-DPDCH according to the amplitude offset estimation value acquired by the E-DPDCH amplitude offset estimation module, the DPCCH based channel estimation value, the E-DPDCH data acquired after re-encoded by the re-encoding module, the frequency offset estimation value and the multipath phase information.

The second embodiment

The second embodiment uses the data channel based channel estimation value to reconstruct the data channel, and the method for cancelling interference in this embodiment comprises:
executing data channel descrambling and despreading on the baseband data to acquire the unequalized multipath data, executing the data channel based channel estimation according to the multipath data, and then reconstructing the data channel, executing the interference cancellation on the original baseband data and the data acquired after channel reconstruction.

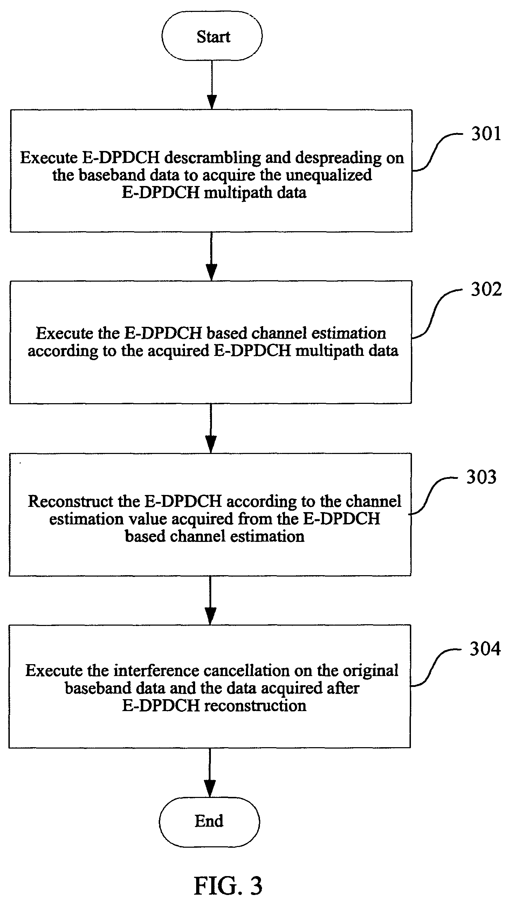

Specifically, as shown in FIG. 3, the process comprises the following steps:
step 301, execute E-DPDCH descrambling and despreading on the baseband data to acquire the unequalized E-DPDCH multipath data;
wherein, for a wireless communication system using the chip-level equalizer, only if the CRC check of the E-DPDCH data acquired after transmission channel demultiplexing is correct, this step is executed, that is, E-DPDCH re-descrambling and re-despreading is executed on the baseband data;
for a wireless communication system using the symbol-level equalizer, since the E-DPDCH descrambling and despreading is also executed on the baseband data before the symbol-level equalization in the prior art, the unequalized E-DPDCH multipath data acquired in the prior art can be used directly;
in addition, if the CRC check of the E-DPDCH data acquired after transmission channel demultiplexing is correct, the E-DPDCH data acquired after transmission channel demultiplexing is re-encoded;
step 302, execute the E-DPDCH based channel estimation according to the acquired E-DPDCH multipath data;
wherein, for a wireless communication system using the chip-level equalizer, the acquired E-DPDCH multipath data and the re-encoded E-DPDCH data can be used to execute the E-DPDCH based channel estimation;
for a wireless communication system using the symbol-level equalizer, the available unequalized E-DPDCH multipath data and the re-encoded E-DPDCH data can be used to execute the E-DPDCH based channel estimation;
step 303, reconstruct the E-DPDCH according to the channel estimation value acquired from the E-DPDCH based channel estimation;
wherein, this step specifically comprises: spreading and scrambling the E-DPDCH according to the channel estimation value acquired from the E-DPDCH based channel estimation, the re-encoded E-DPDCH data and the multipath phase information, and then fading (using the channel estimation value as the abstract of the experienced fading) and filtering (the two RRC filtering processes when the analog signal is through the transmitter and the receiver) the E-DPDCH;
step 304, execute the interference cancellation on the original baseband data and the data acquired after E-DPDCH reconstruction.

In the method of the second embodiment, since the CRC check of the E-DPDCH is correct, the data acquired after re-encoding can be used as the known pilot to execute the data channel based channel estimation. The acquired channel estimation value already contains the transmit power information of the data channel itself, which is similar to the first embodiment, except that the E-DPDCH amplitude offset estimation operation is removed.

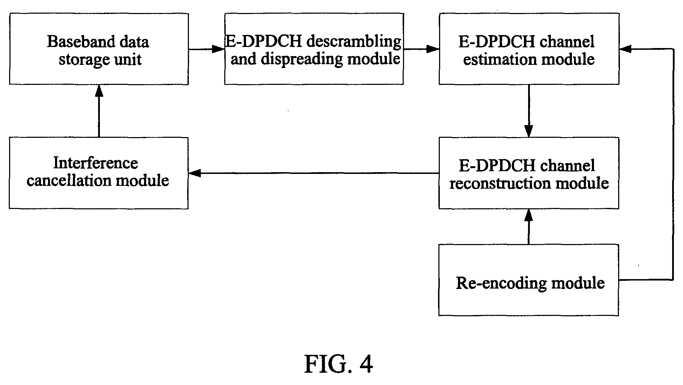

As shown in FIG. 4, the apparatus for cancelling interference in accordance with the second embodiment of the present invention comprises: a baseband data storage unit, an E-DPDCH descrambling and despreading module, a re-encoding module, an E-DPDCH channel estimation module, an E-DPDCH channel reconstruction module and an interference cancellation module;
the baseband data storage unit is used to store the baseband data and the data acquired after interference cancellation;
the E-DPDCH descrambling and despreading module is used to extract the data stored in the baseband data storage unit to execute E-DPDCH descrambling and despreading so as to acquire the unequalized E-DPDCH multipath data;
the re-encoding module is used to re-encode the E-DPDCH data acquired after transmission channel demultiplexing;
the E-DPDCH channel estimation module is used to execute the E-DPDCH based channel estimation according to the E-DPDCH multipath data acquired by the E-DPDCH descrambling and the despreading module and the E-DPDCH data acquired after re-encoded by the re-encoding module;
the E-DPDCH channel reconstruction module is used to reconstruct the E-DPDCH according to the channel estimation value acquired by the E-DPDCH channel estimation module, the E-DPDCH data acquired after re-encoded by the re-encoding module, and the multipath phase information;
the interference cancellation module is used to execute the interference cancellation on the original baseband data stored in the baseband storage unit and the data acquired by the E-DPDCH channel reconstruction module, and store the data acquired after interference cancellation into the baseband data storage unit.

Preferably, the E-DPDCH channel reconstruction module is further used to spread and scramble, and then fade and filter the E-DPDCH according to the channel estimation value acquired from the E-DPDCH based channel estimation, the re-encoded E-DPCCH data and the multipath phase information.

### The third embodiment

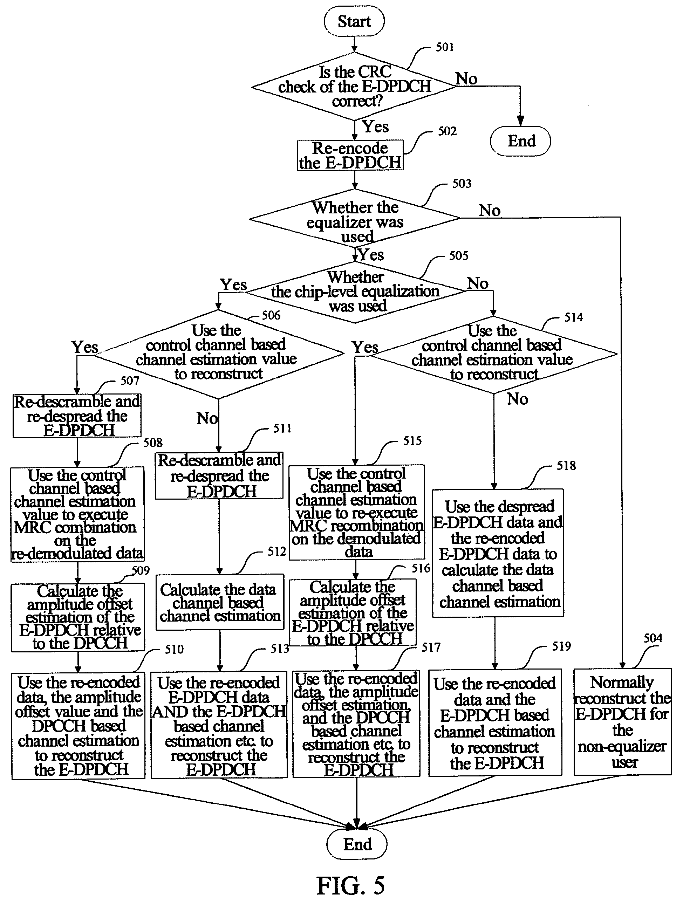

This embodiment combines the first embodiment and the second embodiment, as shown in FIG. 5, the process specifically comprises the following steps:
step 501, normal receiving process, that is, execute normal descrambling and despreading, MRC combination and transmission channel de-multiplexing on the E-DPDCH; check the CRC of E-DPDCH, and if the CRC check is correct, proceed to step 502, otherwise, directly end the process;
step 502, re-encode the E-DPDCH data, proceed to step 503;
step 503, judge whether to use the equalizer (that is, the equalization receiver) or not, if using the traditional Rake receiver, proceed to step 504, otherwise, proceed to step 505;
step 504, reconstruct the E-DPDCH with the conventional way (this is not the key point of the present invention, thus it is not described here), end this process, and the subsequent steps are not executed any longer;
step 505, judge whether to use the chip-level equalizer or the symbol-level equalizer, if it is the chip-level equalizer, proceed to step 506, otherwise, proceed to step 514;
step 506, judge to use what kind of channel estimation value to reconstruct the E-DPDCH, if the DPCCH based channel estimation value is used to reconstruct the E-DPDCH, proceed to step 507, otherwise, proceed to step 511;
step 507, use the baseband data to re-descramble and re-despread the E-DPDCH, proceed to step 508;
step 508, use the DPCCH based channel estimation value to execute MRC combination on the E-DPDCH multipath data acquired after re-despreading and re-descrambling, proceed to step 509;
step 509, estimate the amplitude offset of the E-DPDCH relative to the DPCCH, proceed to step 510;
step 510, use the DPCCH based channel estimation value, the estimation value of the amplitude offset of the E-DPDCH relative to the DPCCH, the re-encoded E-DPDCH data, the frequency offset estimation value acquired with the DPCCH, and the multipath phase information to reconstruct the E-DPDCH, end this process, and the subsequent steps are not executed any longer;
step 511, use the baseband data to re-descramble and re-despread the E-DPDCH, proceed to step 512;
step 512, calculate the E-DPDCH based channel estimation value, proceed to step 513;
step 513, use the E-DPDCH based channel estimation value, the re-encoded E-DPDCH data, and the multipath phase information to reconstruct the E-DPDCH, end this process, and the subsequent steps are not executed any longer;
step 514, judge to use what kind of channel estimation value to reconstruct the E-DPDCH, if the DPCCH based channel estimation value is used to reconstruct the E-DPDCH, proceed to step 515, otherwise, proceed to step 518;
step 515, use the DPCCH based channel estimation value to execute MRC recombination on the descrambled and despread E-DPDCH multipath data, proceed to step 516;
step 516, estimate the amplitude offset of the E-DPDCH relative to the DPCCH, proceed to step 517;
step 517, use the DPCCH based channel estimation value, the estimation value of the amplitude offset of the E-DPDCH relative to the DPCCH, the re-encoded E-DPDCH data, the frequency offset acquired with the DPCCH estimation and the multipath phase information to reconstruct the E-DPDCH, end this process, and the subsequent steps are not executed any longer;
step 518, use the descrambled and despread E-DPDCH multipath data and the re-encoded data to calculate the E-DPDCH based channel estimation value, proceed to step 519;
step 519, use the E-DPDCH based channel estimation value, the re-encoded E-DPDCH data, and the multipath phase information to reconstruct the E-DPDCH, end this process.

In the following, the present invention will be further described in detail with specific application examples.

### The first application example

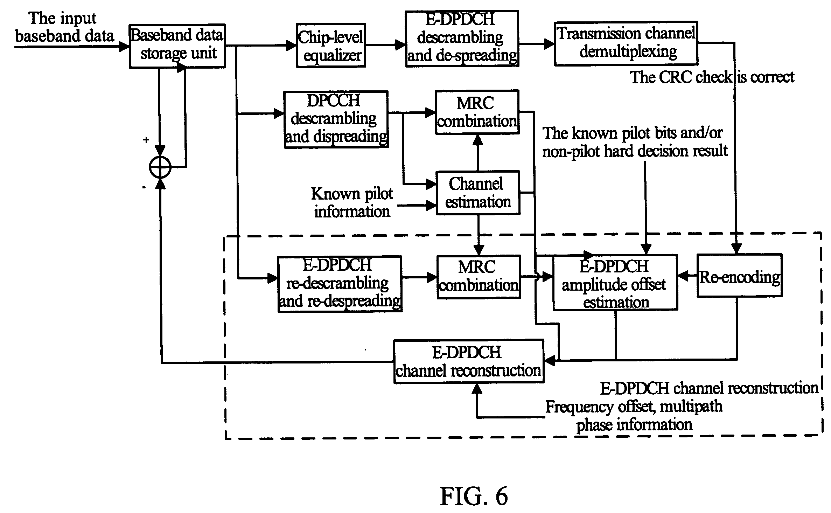

As shown in FIG. 6, the steps for cancelling the interference based on the chip-level equalizer and the DPCCH channel estimation value are:
step A. execute DPCCH descrambling and despreading on the real-time baseband data;
step B. Use the pilot information and the DPCCH descrambled and despread data acquired in step A to execute channel estimation, output the channel estimation values respectively for the DPCCH and the E-DPDCH MRC combinations;
step C. Use the DPCCH channel estimation value acquired in step B and the DPCCH descrambled and despread multipath data acquired in step A to execute DPCCH MRC combination;
step D. Use the same real-time baseband data as in step A to execute the chip-level equalization and cancel the interference;
step E. execute E-DPDCH descrambling and despreading on the output of the step D;
step F. execute the transmission channel demultiplexing on the descrambled and despread E-DPDCH data;
   wherein, the transmission channel demultiplexing comprises the E-DPDCH channel demodulating, deinterleaving, rate de-matching, Turbo decoding, and de-CRC processing; for an E-DPDCH with correct CRC check, reconstructing the E-DPDCH and cancelling the interference of the E-DPDCH;
step G. re-encode the data with correct CRC check; otherwise give up the reconstruction;
step H. use the same real-time baseband data as in steps A and D to re-descramble and re-despread the E-DPDCH channel to acquire the unequalized each path information;
step I. use the channel estimation value obtained in step B to execute MRC combination on the data acquired after E-DPDCH re-descrambling and re-despreading;
step J. use the output data of the steps C, G and I, the DPCCH pilot information and/or non-pilot hard decision result to calculate the amplitude offset value of the E-DPDCH relative to the DPCCH;
step K. use the output data of the steps B, G and J, the frequency offset, and the multipath parameter information to reconstruct the E-DPDCH;
Step L. subtract the signal acquired after E-DPDCH reconstruction from the delayed data stored in the baseband data storage unit to acquire the baseband data after interference cancellation, meanwhile, save the data into the baseband data storage unit.

### The second application example

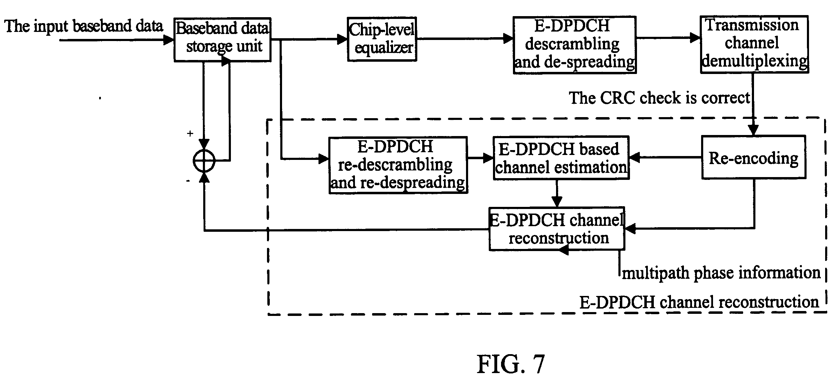

As shown in FIG. 7, the steps for cancelling the interference based on the chip-level equalizer and the DPCCH channel estimation value comprise:
step A. use the real-time baseband data to execute the chip-level equalization and cancel the interference;
step B. execute E-DPDCH descrambling and despreading on the output of the step A;
step C. execute transmission channel demultiplexing on the descrambled and despread E-DPDCH data;
step D. re-encode the data with correct CRC check; otherwise give up the reconstruction;
step E. use the same real-time antenna data as in step A to re-descramble and re-despread the E-DPDCH to acquire the unequalized each path information;
step F. use the E-DPDCH re-encoded data acquired in step D and the re-descrambled and re-despread E-DPDCH multipath data acquired in step E to execute the data channel based channel estimation;
step G. use the output data of the steps F and D as well as the multipath path information to reconstruct the E-DPDCH;
step H. subtract the signal acquired after E-DPDCH reconstruction from the delayed data stored in the baseband data storage unit to acquire the baseband data after interference cancellation, meanwhile, save the data into the baseband data storage unit.

### The third application example

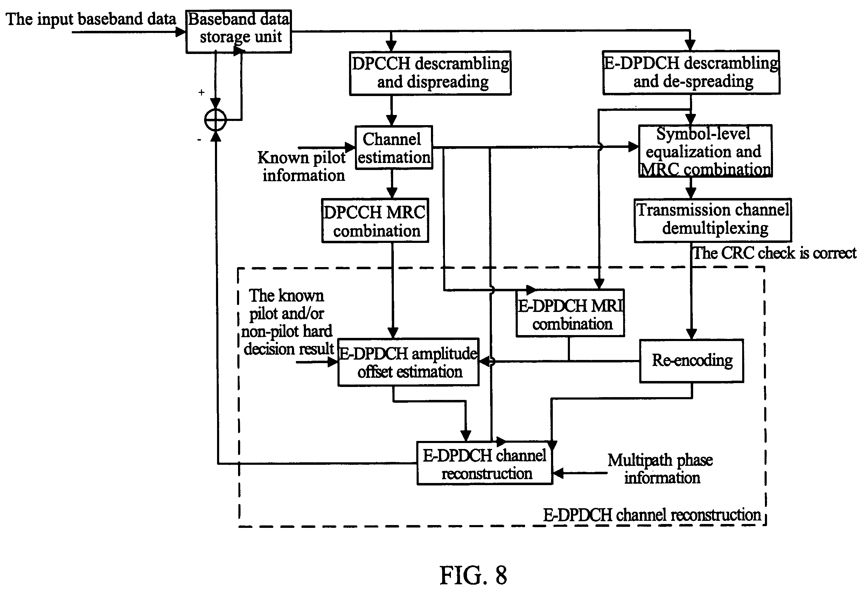

As shown in FIG. 8, the steps for cancelling the interference based on the symbol-level equalizer and the DPCCH channel estimation value comprise:
step A. execute DPCCH descrambling and despreading on the real-time baseband data;
step B. Use the known pilot information and the descrambled and despread DPCCH data acquired in step A to execute channel estimation, output the channel estimation values respectively for the DPCCH MRC combination and the E-DPDCH MRC combination;
step C. Use the DPCCH based channel estimation value acquired in step B and the descrambled and despread DPCCH multipath data acquired in step A to execute the DPCCH MRC combination;
step D. Use the same real-time baseband data as in step A to descramble and despread the E-DPDCH;
step E. Use the output of the steps B and D to execute symbol-level equalization on the E-DPDCH multi-path data to acquire the output after multipath combination;
step F. execute transmission channel demultiplexing on the E-DPDCH data acquired after multipath combination;
step G. re-encode the data with correct CRC check; otherwise give up the reconstruction;
step H. use the channel estimation value obtained in step B and the data acquired after E-DPDCH re-descrambling and re-despreading in step D to execute MRC combination;
step I. use the output data of the steps C, G and I, as well as the DPCCH pilot information and/or non-pilot hard-decision result to calculate the amplitude offset value of the E-DPDCH relative to the DPCCH;
step J. use the output of the steps B, G and I and the multipath phase information to reconstruct the E-DPDCH;
step K. subtract the signal acquired after E-DPDCH reconstruction from the delayed data stored in the baseband data storage unit to acquire the baseband data after interference cancellation, meanwhile, save the data into the baseband data storage unit.

### The fourth application example

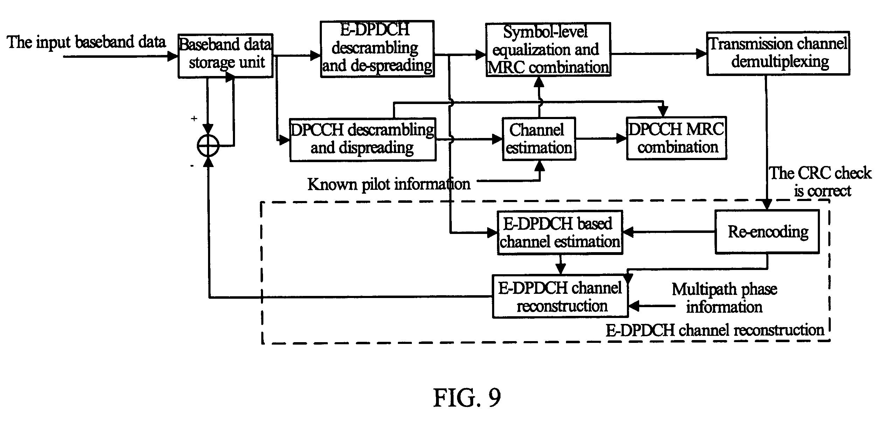

As shown in FIG. 9, the steps for cancelling the interference based on the symbol-level equalizer and the E-DPDCH channel estimation value comprise:
step A. execute DPCCH descrambling and despreading on the real-time baseband data;
step B. Use the known pilot information and the descrambled and despread DPCCH data acquired in step A to execute channel estimation, output the channel estimation values respectively for the DPCCH MRC combination and the E-DPDCH MRC combination;
step C. Use the DPCCH channel estimation value acquired in step B and the descrambled and despread DPCCH multipath data acquired in step A to execute the DPCCH MRC combination;
step D. Use the same real-time baseband data as in step A to descramble and despread the E-DPDCH;
step E. use the output of steps B and D to execute symbol-level equalization on the E-DPDCH multipath data to acquire the output after multipath combination;
step F. execute transmission channel demultiplexing on the E-DPDCH data acquired after multipath combination;
step G. re-encode the data with correct CRC check; otherwise give up the reconstruction;
step H. use the descrambled and despread E-DPDCH data acquired in step D and the E-DPDCH re-encoded data acquired in step D to execute the data channel based channel estimation;
step I. use the output of the steps G and H, as well as the multipath parameter information to reconstruct the E-DPDCH;
Step J. subtract the signal acquired after E-DPDCH reconstruction from the delayed data stored in the baseband data storage unit to acquire the baseband data after interference cancellation, and save the data into the baseband data storage unit.

Although the present invention is described with combination of the specific embodiments, for those skilled in the field, the present invention can be modified or improved without departing from scope defined in the claims of the present invention. All these types of modification or variations should fall into the scope of the claims of the present invention.

### Industrial Applicability

Although there exists technical description respectively about the equalizer and the interference cancellation in the prior art, there is no relevant technical description about the interference cancellation when there is an equalizer. With the unequalized multipath data, the method and apparatus for cancelling interference in a wireless communication system using the equalizer in accordance with the present invention address the problem that the method for cancelling interference in the prior art cannot be applied in a scene using the equalizer. The implementation is relatively simple and is easy to be used in practical applications.

## Claims

1. A method for cancelling interference, used in a wireless communication system using an equalizer, comprising:
executing (101) data channel descrambling and despreading on baseband data to acquire unequalized multipath data, estimating (102-103) an amplitude offset of the data channel relative to a control channel according to the multipath data and a control channel based channel estimation value, and then reconstructing (104) the data channel, executing (105) an interference cancellation on original baseband data and the data acquired after channel reconstruction,
wherein the method comprises:
executing enhanced dedicated physical data channel, E-DPDCH, descrambling and despreading on the baseband data to acquire unequalized E-DPDCH multipath data;
**characterized in that** the method further comprises:
executing a multipath combination according to the acquired E-DPDCH multipath data and a dedicated physical control channel, DPCCH, based channel estimation value;
estimating an amplitude offset of the E-DPDCH relative to the DPCCH according to the data acquired after the E-DPDCH multipath combination;
reconstructing the E-DPDCH according to an estimation value of the amplitude offset;
executing the interference cancellation on the original baseband data and the data acquired after the E-DPDCH reconstruction,
wherein the step of estimating the amplitude offset of the E-DPDCH relative to the DPCCH according to the data acquired after the E-DPDCH multipath combination specifically comprises:
using DPCCH pilot information and/or non-pilot hard decision result to execute a depolarization accumulation on data acquired after DPCCH multipath combination to acquire DPCCH amplitude information;
using the re-encoded E-DPDCH data to execute the depolarization accumulation on the data acquired after the E-DPDCH multipath combination to acquire E-DPDCH amplitude information;
dividing the acquired E-DPDCH amplitude information by the DPCCH amplitude information to acquire the estimation value of the amplitude offset of the E-DPDCH relative to the DPCCH.

2. The method of claim 1, wherein
for a wireless communications system using a chip-level equalizer, if a cyclic redundancy check, CRC, of E-DPDCH data acquired after transmission channel demultiplexing is correct, E-DPDCH descrambling and despreading is executed on the baseband data to acquire the unequalized E-DPDCH multipath data; and, the E-DPDCH data acquired after transmission channel demultiplexing is re-encoded.

3. The method of claim 1, wherein
for a wireless communications system using a symbol-level equalizer, if the cyclic redundancy code, CRC, check of the E-DPDCH data acquired after transmission channel demultiplexing is correct, the unequalized E-DPDCH multipath data is used for the multipath combination; and, the E-DPDCH data acquired after transmission channel demultiplexing is re-encoded.

4. The method of claim 1, comprising:
for a wireless communications system using a chip-level equalizer, performing the following steps:
step A1. executing a dedicated physical control channel, DPCCH, descrambling and despreading on real-time baseband data;
step B1. using pilot information and DPCCH descrambled and despread multipath data acquired in step A1 to execute a channel estimation, outputting channel estimation values respectively for a DPCCH maximum ratio combining, MRC, combination and an enhanced dedicated physical data channel, E-DPDCH MRC combination;
step C1. using the channel estimation value for the DPCCH MRC combination acquired in the step B1 and the DPCCH descrambled and despread multipath data acquired in the step A1 to execute a DPCCH MRC combination;
step D1. using the same real-time baseband data as in the step A1 to execute a chip-level equalization to cancel an interference;
step E1. executing an E-DPDCH descrambling and despreading on the output of the step D1;
step F1. executing a transmission channel demultiplexing on a descrambled and despread E-DPDCH data obtained in the step E1;
step G1. re-encoding data acquired after the transmission channel demultiplexing whose cyclic redundancy check, CRC, is correct;
step H1. using the same real-time baseband data as in steps A1 and D1 to re-descramble and re-despread an E-DPDCH channel to acquire unequalized multipath data;
step I1. using the channel estimation value for the E-DPDCH MRC combination obtained in step B1 to execute a E-DPDCH MRC combination on the data acquired after the E-DPDCH re-descrambling and re-despreading;
step J1. using the output data of the steps C1, G1 and I1, DPCCH pilot information and/or non-pilot hard decision result to calculate an amplitude offset value of the E-DPDCH relative to the DPCCH;
step K1. using the output data of the steps B1, G1 and J1, frequency offset, and multipath parameter information to reconstruct the E-DPDCH;
Step L1. subtracting a signal acquired after E-DPDCH reconstruction from delayed data stored in a baseband data storage unit to acquire baseband data after interference cancellation,
and
for a wireless communications system using a symbol-level equalizer, performing the following steps:
step A2. executing a DPCCH descrambling and despreading on the real-time baseband data;
step B2. using pilot information and descrambled and despread DPCCH multipath data acquired in step A2 to execute a channel estimation, outputting channel estimation values respectively for the DPCCH MRC combination and the E-DPDCH MRC combination;
step C2. using the channel estimation value for the DPCCH MRC combination acquired in step B2 and the descrambled and despread DPCCH multipath data acquired in step A2 to execute a DPCCH MRC combination;
step D2. using the same real-time baseband data as in the step A2 to descramble and despread the E-DPDCH channel;
step E2. using the output of the steps B2 and D2 to execute a symbol-level equalization on the E-DPDCH multipath data to acquire an E-DPDCH data acquired after multipath combination;
step F2. executing a transmission channel demultiplexing on the E-DPDCH data acquired after multipath combination;
step G2. re-encoding data acquired after transmission channel demultiplexing whose CRC is correct;
step H2. using the channel estimation value obtained in step B2 and data acquired after E-DPDCH re-descrambling and re-despreading in step D2 to execute an E-DPDCH MRC combination;
step I2. using the output data of the steps C2, G2 and I2, as well as DPCCH pilot information and/or non-pilot hard-decision result to calculate an amplitude offset value of the E-DPDCH relative to the DPCCH;
step J2. using the output of the steps B2, G2 and I2 and the multipath phase information to reconstruct the E-DPDCH;
step K2. subtracting a signal acquired after the E-DPDCH reconstruction from the delayed data stored in the baseband data storage unit to acquire the baseband data after interference cancellation.

5. The method of claim 1, wherein
the step of reconstructing the E-DPDCH according to the estimation value of the amplitude offset specifically comprises:
spreading and scrambling, and then fading and filtering the E-DPDCH according to the estimation value of the amplitude offset, a DPCCH based channel estimation value, the re-encoded E-DPDCH data, a frequency offset estimation value and multipath phase information.

6. An apparatus for cancelling interference, used in a wireless communication system using an equalizer, comprising: a baseband data storage unit, an enhanced dedicated physical data channel, E-DPDCH, descrambling and despreading module, a maximum ratio combining, MRC, module, a re-encoding module, an E-DPDCH amplitude offset estimation module, an E-DPDCH channel reconstruction module and an interference cancellation module; **characterized in that**
the baseband data storage unit is configured to store baseband data and the data acquired after an interference cancellation;
the E-DPDCH descrambling and despreading module is configured to acquire the data stored in the baseband data storage unit to execute E-DPDCH descrambling and despreading so as to acquire unequalized E-DPDCH multipath data;
the MRC module is configured to execute a multipath combination according to a dedicated physical control channel, DPCCH, based channel estimation value and the E-DPDCH multipath data acquired by the E-DPDCH descrambling and despreading module;
the re-encoding module is configured to re-encode E-DPDCH data acquired after transmission channel demultiplexing;
the E-DPDCH amplitude offset estimation module is configured to use DPCCH pilot information and/or non-pilot hard decision result, the data acquired after the DPCCH multipath combination, the E-DPDCH data re-encoded by the re-encoding module and the data acquired by the MRC module after the E-DPDCH multipath combination to estimate an amplitude offset of the E-DPDCH relative to the DPCCH;
the E-DPDCH channel reconstruction module is configured to reconstruct the E-DPDCH according to an estimation value of the amplitude offset acquired by the E-DPDCH amplitude offset estimation module, a DPCCH based channel estimation value, the E-DPDCH data re-encoded by the re-encoding module, a frequency offset estimation value and multipath phase information;
the interference cancellation module is configured to execute the interference cancellation on original baseband data stored in the baseband storage unit and the data acquired by the E-DPDCH channel reconstruction module, and store the data acquired after the interference cancellation into the baseband data storage unit,
wherein the E-DPDCH amplitude offset estimation module is further configured to use the DPCCH pilot information and/or non-pilot hard decision result to execute a depolarization accumulation on the data acquired after the DPCCH multipath combination so as to acquire DPCCH amplitude information; use the E-DPDCH data re-encoded by the re-coding module to execute the depolarization accumulation on the data acquired by the MRC module after the E-DPDCH multipath combination so as to acquire E-DPDCH amplitude information; divide the acquired E-DPDCH amplitude information by the DPCCH amplitude information to acquire the estimation value of the amplitude offset of the E-DPDCH relative to the DPCCH.

## Patentansprüche

1. Verfahren zum Aufheben einer Interferenz, das in einem Drahtloskommunikationssystem unter Verwendung einer Entzerrungseinrichtung verwendet wird, umfassend, dass:
ein Datenkanalentwürfeln und -entspreizen an Basisbanddaten ausgeführt wird (101), um nicht entzerrte Mehrwegdaten zu erlangen, ein Amplituden-Offset des Datenkanals relativ zu einem Steuerkanal gemäß den Mehrwegdaten und einem steuerkanalbasierten Kanalschätzwert geschätzt wird (102 - 103) und dann der Datenkanal rekonstruiert wird (104) und eine Interferenzaufhebung an ursprünglichen Basisbanddaten und den nach der Kanalrekonstruktion erlangten Daten ausgeführt wird (105),
wobei das Verfahren umfasst, dass:
ein EntwürFeln und Entspreizen eines verbesserten dedizierten physikalischen Datenkanals, E-DPDCH, an den Basisbanddaten ausgeführt wird, um nicht entzerrte E-DPDCH-Mehrwegdaten zu erlangen,
**dadurch gekennzeichnet, dass**
das Verfahren ferner umfasst, dass:
eine Mehrwegkombination gemäß den erlangten E-DPDCH-Mehrwegdaten und einem auf einem dedizierten physikalischen Steuerkanal, DPCCH, basierenden Kanalschätzwert ausgeführt wird;
ein Amplituden-Offset des E-DPDCH relativ zu dem DPCCH gemäß den nach der E-DPDCH-Mehrwegkombination erlangten Daten geschätzt wird;
der E-DPDCH gemäß einem Schätzwert des Amplituden-Offsets rekonstruiert wird;
die Interferenzaufhebung an den ursprünglichen Basisbanddaten und den nach der E-DPDCH-Rekonstruktion erlangten Daten ausgeführt wird,
wobei der Schritt des Schätzens des Amplituden-Offsets des E-DPDCH relativ zu dem DPCCH gemäß den nach der E-DPDCH-Mehrwegkombination erlangten Daten im Speziellen umfasst, dass:
eine DPCCH-Pilot-Information und/oder ein Nicht-Pilot-Ergebnis einer harten Entscheidung verwendet werden/wird, um eine Depolarisationsakkumulation an Daten auszuführen, die nach der DPCCH-Mehrwegkombination erlangt werden, um eine DPCCH-Amplitudeninformation zu erlangen;
die erneut codierten E-DPDCH-Daten verwendet werden, um die Depolarisationsakkumulation an den Daten auszuführen, die nach der E-DPDCH-Mehrwegkombination erlangt werden, um eine E-DPDCH-Amplitudeninformation zu erlangen;
die erlangte E-DPDCH-Amplitudeninformation durch die DPCCH-Amplitudeninformation geteilt wird, um den Schätzwert des Amplituden-Offsets des E-DPDCH relativ zu dem DPCCH zu erlangen.

2. Verfahren nach Anspruch 1, wobei
bei einem Drahtloskommunikationssystem unter Verwendung einer Entzerrungseinrichtung auf Chipebene, wenn eine zyklische Redundanzprüfung, CRC, von E-DPDCH-Daten, die nach einem Übertragungskanal-Demultiplexen erlangt werden, korrekt ist, ein E-DPDCH-Entwürfeln und -Entspreizen an den Basisbanddaten ausgeführt wird, um die nicht entzerrten E-DPDCH-Mehrwegdaten zu erlangen; und die E-DPDCH-Daten, die nach dem Übertragungskanal-Demultiplexen erlangt werden, erneut codiert werden.

3. Verfahren nach Anspruch 1, wobei
bei einem Drahtloskommunikationssystem unter Verwendung einer Entzerrungseinrichtung auf Symbolebene, wenn die zyklische Redundanzcodeprüfung, CRC, der E-DPDCH-Daten, die nach einem ÜbertragungskanalDemultiplexen erlangt werden, korrekt ist, die nicht entzerrten E-DPDCH-Mehrwegdaten für die Mehrwegkombination verwendet werden; und die EDPDCH-Daten, die nach dem Übertragungskanal-Demultiplexen erlangt werden, erneut codiert werden.

4. Verfahren nach Anspruch 1, umfassend, dass:
bei einem Drahtloskommunikationssystem unter Verwendung einer Entzerrungseinrichtung auf Chipebene die folgenden Schritte durchgeführt werden:
Schritt A1. Ausführen eines Entwürfelns und Entspreizens eines dedizierten physikalischen Steuerkanals, DPCCH, an Echtzeit-Basisbanddaten;
Schritt B1. Verwenden einer Pilot-Information und der in Schritt A1 erlangten DPCCH-entwürfelten und -entspreizten Mehrwegdaten zum Ausführen einer Kanalschätzung, wobei Kanalschätzwerte jeweils für eine DPCCH-Maximum Ratio Combining-Kombination, DPCCH-MRC-Kombination, und eine MRC-Kombination eines verbesserten dedizierten physikalischen Datenkanals, E-DPDCH-MRC-Kombination, ausgegeben werden;
Schritt C1. Verwenden des Kanalschätzwerts für die in Schritt B1 erlangte DPCCH-MRC-Kombination und der in Schritt A1 erlangten DPCCHentwürfelten und -entspreizten Mehrwegdaten zum Ausführen einer DPCCH-MRC-Kombination;
Schritt D1. Verwenden derselben Echtzeit-Basisbanddaten wie in Schritt A1 1 zum Ausführen einer Entzerrung auf Chipebene zum Aufheben einer Interferenz;
Schritt E1. Ausführen eines E-DPDCH-Entwürfelns und -Entspreizens an dem Ausgang von Schritt D1;
Schritt F1. Ausführen eines Übertragungskanal-Demultiplexens an in Schritt E1 erhaltenen entwürfelten und entspreizten E-DPDCH-Daten;
Schritt G1. erneutes Codieren von nach dem Übertragungskanal-Demultiplexen erlangten Daten, deren zyklische Redundanzprüfung, CRC, korrekt ist;
Schritt H1. Verwenden derselben Echtzeit-Basisbanddaten wie in den Schritten A1 und D1 zum erneuten Entwürfein und erneuten Entspreizen eines E-DPDCH-Kanals zum Erlangen von nicht entzerrten Mehrwegdaten;
Schritt 11. Verwenden des Kanalschätzwerts für die in Schritt B1 erhaltene E-DPDCH-MRC-Kombination zum Ausführen einer E-DPDCH-MRC-Kombination an den Daten, die nach dem erneuten E-DPDCH-Entwürfeln und dem erneuten -Entspreizen erlangt werden;
Schritt J1. Verwenden der Ausgangsdaten der Schritte C1, G1 und 11, einer DPCCH-Pilot-Information und/oder eines Nicht-Pilot-Ergebnisses einer harten Entscheidung zum Berechnen eines Amplituden-Offset-Werts des E-DPDCH relativ zu dem DPCCH;
Schritt K1. Verwenden der Ausgangsdaten der Schritte B1, G1 und J1,
eines Frequenz-Offsets und einer Mehrwegparameterinformation zum Rekonstruieren des E-DPDCH;
Schritt L1. Subtrahieren eines nach einer E-DPDCH-Rekonstruktion erlangten Signals von in einer Basisbanddatenspeichereinheit gespeicherten verzögerten Daten zum Erlangen von Basisbanddaten nach einer Interferenzaufhebung, und
bei einem Drahtloskommunikationssystem unter Verwendung einer Entzerrungseinrichtung auf Symbolebene die folgenden Schritte durchgeführt werden:
Schritt A2. Ausführen eines DPCCH-Entwürfelns und -Entspreizens an den Echtzeit-Basisbanddaten;
Schritt B2. Verwenden einer Pilot-Information und der in Schritt A2 erlangten entwürfelten und entspreizten DPCCH-Mehrwegdaten zum Ausführen einer Kanalschätzung, wobei Kanalschätzwerte jeweils für die DPCCH-MRC-Kombination und die E-DPDCH-MRC-Kombination ausgegeben werden;
Schritt C2. Verwenden des Kanalschätzwerts für die in Schritt B2 erlangte DPCCH-MRC-Kombination und der in Schritt A2 erlangten entwürfelten und entspreizten DPCCH-Mehrwegdaten zum Ausführen einer DPCCH-MRC-Kombination;
Schritt D2. Verwenden derselben Echtzeit-Basisbanddaten wie in Schritt A2 zum Entwürfeln und Entspreizen des E-DPDCH-Kanals;
Schritt E2. Verwenden des Ausgangs der Schritte B2 und D2 zum Ausführen einer Entzerrung auf Symbolebene an den E-DPDCH-Mehrwegdaten zum Erlangen von E-DPDCH-Daten, die nach der Mehrwegkombination erlangt werden;
Schritt F2. Ausführen eines Übertragungskanal-Demultiplexens an den nach der Mehrwegkombination erlangten E-DPDCH-Daten;
Schritt G2. erneutes Codieren von nach dem Übertragungskanal-Demultiplexen erlangten Daten, deren CRC korrekt ist;
Schritt H2. Verwenden des in Schritt B2 erhaltenen Kanalschätzwerts und der Daten, die nach dem erneuten E-DPDCH-Entwürfeln und dem erneuten -Entspreizen in Schritt D2 erlangt werden, zum Ausführen einer E-DPDCH-MRC-Kombination;
Schritt 12. Verwenden der Ausgangsdaten der Schritte C2, G2 und I2 sowie einer DPCCH-Pilot-Information und/oder eines Nicht-Pilot-Ergebnisses einer harten Entscheidung zum Berechnen eines Amplituden-Offset-Werts des E-DPDCH relativ zu dem DPCCH;
Schritt J2. Verwenden des Ausgangs der Schritte B2, G2 und I2 und der Mehrwegphaseninformation zum Rekonstruieren des E-DPDCH;
Schritt K2. Subtrahieren eines nach der E-DPDCH-Rekonstruktion erlangten Signals von den in der Basisbanddatenspeichereinheit gespeicherten verzögerten Daten zum Erlangen der Basisbanddaten nach einer Interferenzaufhebung.

5. Verfahren nach Anspruch 1, wobei
der Schritt des Rekonstruierens des E-DPDCH gemäß dem Schätzwert des Amplituden-Offsets im Speziellen umfasst:
Spreizen und Verwürfeln und dann Fading und Filtern des E-DPDCH gemäß dem Schätzwert des Amplituden-Offsets, einem DPCCH-basierten Kanalschätzwert, den erneut codierten E-DPDCH-Daten, einem Frequenz-Offset-Schätzwert und einer Mehrwegphaseninformation.

6. Vorrichtung zum Aufheben einer Interferenz, die in einem Drahtloskommunikationssystem unter Verwendung einer Entzerrungseinrichtung verwendet wird, umfassend: eine Basisbanddatenspeichereinheit, ein Entwürfelungsund Entspreizungsmodul eines verbesserten dedizierten physikalischen Datenkanals, E-DPDCH, ein Maximum Ratio Combining-Modul, MRC-Modul, ein Modul eines erneuten Codierens, ein E-DPDCH-Amplituden-Offset-Schätzmodul, ein E-DPDCH-Kanalrekonstruktionsmodul und ein Interferenzaufhebungsmodul;
**dadurch gekennzeichnet, dass**
die Basisbanddatenspeichereinheit ausgestaltet ist, um Basisbanddaten und die nach einer Interferenzaufhebung erlangten Daten zu speichern;
das E-DPDCH-Entwürfelungs- und -Entspreizungsmodul ausgestaltet ist, um die in der Basisbanddatenspeichereinheit gespeicherten Daten zu erlangen, um ein E-DPDCH-Entwürfeln und -Entspreizen auszuführen, um nicht entzerrte E-DPDCH-Mehrwegdaten zu erlangen;
das MRC-Modul ausgestaltet ist, um eine Mehrwegkombination gemäß einem auf einem dedizierten physikalischen Steuerkanal, DPCCH, basierenden Kanalschätzwert und den durch das E-DPDCH-Entwürfelungs- und -Entspreizungsmodul erlangten E-DPDCH-Mehrwegdaten auszuführen;
das Modul eines erneuten Codierens ausgestaltet ist, um nach einem Übertragungskanal-Demultiplexen erlangte E-DPDCH-Daten erneut zu codieren;
das E-DPDCH-Amplituden-Offset-Schätzmodul ausgestaltet ist, um eine DPCCH-Pilot-Information und/oder ein Nicht-Pilot-Ergebnis einer harten Entscheidung, die nach der DPCCH-Mehrwegkombination erlangten Daten, die durch das Modul eines erneuten Codierens erneut codierten E-DPDCH-Daten und die durch das MRC-Modul nach der E-DPDCH-Mehrwegkombination erlangten Daten zu verwenden, um einen Amplituden-Offset des E-DPDCH relativ zu dem DPCCH zu schätzen;
das E-DPDCH-Kanalrekonstruktionsmodul ausgestaltet ist, um den E-DPDCH gemäß einem Schätzwert des Amplituden-Offsets, der durch das E-DPDCH-Amplituden-Offset-Schätzmodul erlangt wird, einem DPCCH-basierten Kanalschätzwert, den durch das Modul eines erneuten Codierens erneut codierten E-DPDCH-Daten, einem Frequenz-Offset-Schätzwert und einer Mehrwegphaseninformation zu rekonstruieren;
das Interferenzaufhebungsmodul ausgestaltet ist, um die Interferenzaufhebung an ursprünglichen Basisbanddaten, die in der Basisbandspeichereinheit gespeichert sind, und den Daten, die durch das E-DPDCH-Kanalrekonstruktionsmodul erlangt werden, auszuführen und die nach der Interferenzaufhebung erlangten Daten in der Basisbanddatenspeichereinheit zu speichern,
wobei das E-DPDCH-Amplituden-Offset-Schätzmodul ferner ausgestaltet ist, um die DPCCH-Pilot-Information und/oder das Nicht-Pilot-Ergebnis einer harten Entscheidung zu verwenden, um eine Depolarisationsakkumulation an den Daten auszuführen, die nach der DPCCH-Mehrwegkombination erlangt werden, um eine DPCCH-Amplitudeninformation zu erlangen;
die durch das Modul eines erneuten Codierens erneut codierten E-DPDCH-Daten zu verwenden, um die Depolarisationsakkumulation an den Daten auszuführen, die durch das MRC-Modul nach der E-DPCCH-Mehrwegkombination erlangt werden, um eine E-DPDCH-Amplitudeninformation zu erlangen; die erlangte E-DPDCH-Amplitudeninformation durch die DPCCH-Amplitudeninformation zu teilen, um den Schätzwert des Amplituden-Offsets des E-DPDCH relativ zu dem DPCCH zu erlangen.

## Revendications

1. Procédé pour annuler une interférence, utilisé dans un système de communication sans fil utilisant un égaliseur, comprenant :
l'exécution (101) de désembrouillage et désétalement de canal de données sur des données en bande de base pour acquérir des données multi-trajets non égalisées, l'estimation (102-103) d'un décalage d'amplitude du canal de données par rapport à un canal de commande selon les données multi-trajets et d'une valeur d'estimation de canal basée sur un canal de commande, et ensuite la reconstruction (104) du canal de données, l'exécution (105) d'une annulation d'interférence sur des données en bande de base originales et les données acquises après la reconstruction de canal,
le procédé comprenant :
l'exécution de désembrouillage et désétalement de canal de données physique dédié amélioré, E-DPDCH, sur les données en bande de base pour acquérir des données multitrajets E-DPDCH non égalisées ;
le procédé étant **caractérisé en ce qu'**il comprend en outre :
l'exécution d'une combinaison multi-trajet selon les données multi-trajets de E-DPDCH acquises et une valeur d'estimation de canal basée sur un canal de commande physique dédié, DPCCH ;
l'estimation un décalage d'amplitude de l'E-DPDCH par rapport au DPCCH selon les données acquises après la combinaison multi-trajet de E-DPDCH ;
la reconstruction de l'E-DPDCH selon une valeur d'estimation du décalage d'amplitude ;
l'exécution de l'annulation d'interférence sur les données en bande de base originales et les données acquises après la reconstruction d'E-DPDCH,
dans lequel l'étape d'estimation du décalage d'amplitude de l'E-DPDCH par rapport au DPCCH selon les données acquises après la combinaison multi-trajet E-DPDCH comprend plus particulièrement :
l'utilisation d'informations de pilote de DPCCH et/ou d'un résultat de décision ferme de non-pilote pour exécuter une accumulation de dépolarisation sur des données acquises après la combinaison multi-trajet de DPCCH pour acquérir des informations d'amplitude de DPCCH ;
l'utilisation des données d'E-DPDCH ré-encodées pour exécuter l'accumulation de dépolarisation sur les données acquises après la combinaison multi-trajet d'E-DPDCH pour acquérir des informations d'amplitude d'E-DPDCH ;
la division des informations d'amplitude d'E-DPDCH acquises par les informations d'amplitude de DPCCH pour acquérir la valeur d'estimation du décalage d'amplitude de l'E-DPDCH par rapport au DPCCH.

2. Procédé selon la revendication 1, dans lequel :
pour un système de communications sans fil utilisant un égaliseur au niveau chip, si un contrôle de redondance cyclique, CRC, de données d'E-DPDCH acquises après le démultiplexage de canal de transmission est correct, un désembrouillage et désétalement d'E-DPDCH est exécuté sur les données en bande de base pour acquérir les données multi-trajets d'E-DPDCH non égalisées ; et, les données d'E-DPDCH acquises après le démultiplexage de canal de transmission sont ré-encodées.

3. Procédé selon la revendication 1, dans lequel :
pour un système de communications sans fil utilisant un égaliseur au niveau symbole, si le contrôle de code de redondance cyclique, CRC, des données d'E-DPDCH acquises après le démultiplexage de canal de transmission est correct, les données multi-trajets d'E-DPDCH non égalisées sont utilisées pour la combinaison multi-trajet ; et, les données d'E-DPDCH acquises après le démultiplexage de canal de transmission sont ré-encodées.

4. Procédé selon la revendication 1, comprenant :
pour un système de communications sans fil utilisant un égaliseur au niveau chip, l'exécution des étapes suivantes :
étape A1. exécuter un désembrouillage et désétalement de canal de commande physique dédié, DPCCH, sur des données en bande de base en temps réel ;
étape B1. utiliser des informations de pilote et des données multi-trajets désembrouillées et désétalées de DPCCH acquises à l'étape A1 pour exécuter une estimation de canal, sortir des valeurs d'estimation de canal respectivement pour une combinaison à combinaison à rapport maximal, MRC, de DPCCH et une combinaison MRC de canal de données physique dédié amélioré, E-DPDCH ;
étape C1. utiliser la valeur d'estimation de canal pour la combinaison MRC de DPCCH acquise à l'étape B1 et les données multi-trajets désembrouillées et désétalées de DPCCH acquises à l'étape A1 pour exécuter une combinaison MRC de DPCCH ;
étape D1. utiliser les mêmes données en bande de base en temps réel qu'à l'étape A1 pour exécuter une égalisation au niveau chip pour annuler une interférence ;
étape E1. exécuter un désembrouillage et désétalement E-DPDCH sur la sortie de l'étape D1 ;
étape F1. exécuter un démultiplexage de canal de transmission sur des données d'E-DPDCH désembrouillées et désétalées obtenues à l'étape E1 ;
étape G1. ré-encoder des données acquises après le démultiplexage de canal de transmission dont le contrôle de redondance cyclique, CRC, est correct ;
étape H1. utiliser les mêmes données en bande de base en temps réel qu'aux étapes A1 et D1 pour re-désembrouiller et re-désétaler un canal E-DPDCH pour acquérir des données multi-trajets non égalisées ;
étape I1. utiliser la valeur d'estimation de canal pour la combinaison MRC d'E-DPDCH obtenue à l'étape B1 pour exécuter une combinaison MRC d'E-DPDCH sur les données acquises après le re-désembrouillage et re-désétalement d'E-DPDCH ;
étape J1. utiliser les données de sortie des étapes C1, G1 et I1, des informations de pilote de DPDCCH et/ou un résultat de décision ferme de non-pilote pour calculer une valeur de décalage d'amplitude de l'E-DPDCH par rapport au DPCCH ;
étape K1. utiliser les données de sortie des étapes B1, G1 et J1, un décalage de fréquence, et des informations de paramètre multi-trajets pour reconstruire l'E-DPDCH ;
étape L1. soustraire un signal acquis après la reconstruction d'E-DPDCH de données retardées stockées dans une unité de stockage de données en bande de base pour acquérir des données en bande de base après l'annulation d'interférence,
et
pour un système de communications sans fil utilisant un égaliseur au niveau symbole, l'exécution des étapes suivantes :
étape A2. exécuter un désembrouillage et désétalement de DPCCH sur les données en bande de base en temps réel ;
étape B2. utiliser des informations de pilote et des données multi-trajets de DPCCH désembrouillées et désétalées acquises à l'étape A2 pour exécuter une estimation de canal, sortir des valeurs d'estimation de canal respectivement pour la combinaison MRC de DPCCH et la combinaison MRC d'E-DPDCH ;
étape C2. utiliser la valeur d'estimation de canal pour la combinaison MRC de DPCCH acquise à l'étape B2 et les données multi-trajets de DPCCH désembrouillées et désétalées acquises à l'étape A2 pour exécuter une combinaison MRC de DPCCH ;
étape D2. utiliser les mêmes données en bande de base en temps réel qu'à l'étape A2 pour désembrouiller et désétaler le canal E-DPDCH ;
étape E2. utiliser la sortie des étapes B2 et D2 pour exécuter une égalisation au niveau symbole sur les données multi-trajets d'E-DPDCH pour acquérir des données d'E-DPDCH acquises après la combinaison multi-trajet ;
étape F2. exécuter un démultiplexage de canal de transmission sur les données d'E-DPDCH acquises après la combinaison multi-trajet ;
étape G2. ré-encoder des données acquises après le démultiplexage de canal de transmission dont le CRC est correct ;
étape H2. utiliser la valeur d'estimation de canal obtenue à l'étape B2 et les données acquises après le redésembrouillage et re-désétalement d'E-DPDCH à l'étape D2 pour exécuter une combinaison MRC d'E-DPDCH ;
étape 12. utiliser les données de sortie des étapes C2, G2 et 12, ainsi que des informations de pilote de DPDCCH et/ou un résultat de décision ferme de non-pilote pour calculer une valeur de décalage d'amplitude de l'E-DPDCH par rapport au DPCCH ;
étape J2. utiliser la sortie des étapes B2, G2 et 12 et les informations de phase multi-trajets pour reconstruire l'E-DPDCH ;
étape K2. soustraire un signal acquis après la reconstruction d'E-DPDCH des données retardées stockées dans l'unité de stockage de données en bande de base pour acquérir les données en bande de base après l'annulation d'interférence.

5. Procédé selon la revendication 1, dans lequel :
l'étape de reconstruction de l'E-DPDCH selon la valeur d'estimation du décalage d'amplitude comprend plus particulièrement :
l'étalement et l'embrouillage, et ensuite l'évanouissement et le filtrage de l'E-DPDCH selon la valeur d'estimation du décalage d'amplitude, une valeur d'estimation de canal basée sur DPCCH, les données d'E-DPDCH ré-encodées, une valeur d'estimation de décalage de fréquence et des informations de phase multi-trajets.

6. Appareil pour annuler une interférence, utilisé dans un système de communication sans fil utilisant un égaliseur, comprenant : une unité de stockage de données en bande de base, un module de désembrouillage et désétalement de canal de données physique dédié amélioré, E-DPDCH, un module de combinaison à rapport maximal, MRC, un module de ré-encodage, un module d'estimation de décalage d'amplitude d'E-DPDCH, un module de reconstruction de canal E-DPDCH et un module d'annulation d'interférence ; **caractérisé en ce que** :
l'unité de stockage de données en bande de base est configurée pour stocker des données en bande de base et les données acquises après une annulation d'interférence ;
le module de désembrouillage et désétalement d'E-DPDCH est configuré pour acquérir les données stockées dans l'unité de stockage de données en bande de base pour exécuter un désembrouillage et désétalement d'E-DPDCH afin d'acquérir des données multi-trajets d'E-DPDCH non égalisées ;
le module MRC est configuré pour exécuter une combinaison multi-trajet selon une valeur d'estimation de canal basée sur un canal de commande physique dédié, DPCCH, et les données multi-trajets d'E-DPDCH acquises par le module de désembrouillage et désétalement d'E-DPDCH ;
le module de ré-encodage est configuré pour ré-encoder des données d'E-DPDCH acquises après le démultiplexage de canal de transmission ;
le module d'estimation de décalage d'amplitude d'E-DPDCH est configuré pour utiliser des informations de pilote de DPCCH et/ou un résultat de décision ferme de non-pilote, les données acquises après la combinaison multitrajet de DPCCH, les données d'E-DPDCH ré-encodées par le module de ré-encodage et les données acquises par le module MRC après la combinaison multi-trajet d'E-DPDCH pour estimer un décalage d'amplitude de l'E-DPDCH par rapport au DPCCH ;
le module de reconstruction de canal E-DPDCH est configuré pour reconstruire l'E-DPDCH selon une valeur d'estimation du décalage d'amplitude acquise par le module d'estimation de décalage d'amplitude d'E-DPDCH, une valeur d'estimation de canal basée sur DPCCH, les données d'E-DPDCH ré-encodées par le module de ré-encodage, une valeur d'estimation de décalage de fréquence et des informations de phase multi-trajets ;
le module d'annulation d'interférence est configuré pour exécuter l'annulation d'interférence sur des données en bande de base originales stockées dans l'unité de stockage en bande de base et les données acquises par le module de reconstruction de canal E-DPDCH, et stocker les données acquises après l'annulation d'interférence dans l'unité de stockage de données en bande de base,
dans lequel le module d'estimation de décalage d'amplitude d'E-DPDCH est en outre configuré pour utiliser les informations de pilote de DPCCH et/ou un résultat de décision ferme de non-pilote pour exécuter une accumulation de dépolarisation sur les données acquises après la combinaison multi-trajet de DPCCH afin d'acquérir des informations d'amplitude de DPCCH ; utiliser les données d'E-DPDCH ré-encodées par le module de re-codage pour exécuter l'accumulation de dépolarisation sur les données acquises par le module MRC après la combinaison multitrajet d'E-DPDCH afin d'acquérir des informations d'amplitude d'E-DPDCH ; diviser les informations d'amplitude d'E-DPDCH acquises par les informations d'amplitude de DPCCH pour acquérir la valeur d'estimation du décalage d'amplitude de l'E-DPDCH par rapport au DPCCH.
